# EUROPÄISCHE PATENTSCHRIFT

(11) **EP 2 366 926 B1**
(45) Veröffentlichungstag und Bekanntmachung des Hinweises auf die Patenterteilung: **05.07.2017**
(21) Anmeldenummer: 11002137.5
(22) Anmeldetag: 15.03.2011
(51) Int. Cl.: F16K 31/122, F16K 37/00

(54) **Vorrichtung zur Endlagenerkennung in Hubventilen, Ventilbausatz sowie Sensormodul hierfür**
Device for recognising the end position of hydraulic valves, valve component set and sensor module
Dispositif de reconnaissance de position finale dans des soupapes à levée, kit de soupape et module de capteur associé

(30) Priorität: 16.03.2010 DE 202010003659 U
(43) Veröffentlichungstag der Anmeldung: 21.09.2011
(73) Patentinhaber: Bürkert Werke GmbH, 74653 Ingelfingen (DE)
(72) Erfinder: Fischer, Marc, 74653 Künzelsau (DE)
(74) Vertreter: Prinz & Partner mbB

(56) Entgegenhaltungen:
- EP-A1- 1 491 862
- DE-A1- 10 350 235
- US-A- 3 538 948

## Beschreibung

Die Erfindung betrifft eine Vorrichtung zur Endlagenerkennung in Hubventilen nach dem Oberbegriff des Anspruchs 1.

Zur Endlagenbestimmung in Hubventilen werden verschiedene Vorrichtungen eingesetzt. So sind zum Beispiel mechanische Endschalter bekannt, bei denen bewegliche Schlitten und Halter eingesetzt werden. Hierfür sind aufwändige und relativ kostspielige Vorrichtungen nötig. Die Erfindung betrifft insbesondere Vorrichtungen für Hubventile, bei denen ein Ende der Ventilspindel, das in ein Ventilgehäuse ragt, ein Ventilbetätigungselement aufweist, welches dort mit einem Ventilsitz zusammenwirkt. Ein Magnetelement auf der Ventilspindel, dessen Position zur Positionsbestimmung der Spindel herangezogen wird, befindet sich nicht im Ventilgehäuse, was den Vorteil hat, dass es keinen Kontakt mit dem Medium hat. Magnetmaterialien mit hoher Magnetkraft weisen üblicherweise nämlich keine hohe chemische Beständigkeit auf.

Eine solche Vorrichtung ist beispielsweise aus der EP 1 491 862 A1 bekannt. Um neben den Endlagen zusätzliche Spindelpositionen zu detektieren weist diese Vorrichtung zusätzliche Sensoren auf. Eine weitere Vorrichtung zur Endlagenerkennung in Hubventilen wird aus der US 3 538 948 A bekannt.

Mit der Erfindung wird eine einfache, kompakte und kostengünstige Lösung für die Endlagenerkennung in Hubventilen zur Verfügung gestellt.

Erfindungsgemäß ist hierzu bei einer Vorrichtung nach dem Oberbegriff des Anspruch 1 vorgesehen, dass die zwei Reedsensoren oder optischen Sensoren auf einer Leiterplatte im Sensormodul angeordnet sind und wenigstens ein weiterer Reedsensor oder optischer Sensor auf der Leiterplatte angeordnet ist, der weder der ersten noch der zweiten Spindelposition zugeordnet ist., wobei der wenigstens eine weitere Reedsensor oder optische Sensor auf der Leiterplatte, der keine der Spindelpositionen detektiert, ausgeschaltet werden kann. Diese Vorrichtung weist ein Sensormodul auf, wobei eine Ventilspindel im oder entlang des Sensormoduls axial, entsprechend dem Hub, von einer ersten zu einer zweiten Position reversibel verschiebbar ist. Die Vorrichtung ist insbesondere Teil eines sogenannten Steuerkopfs, der auf den eigentlichen Antriebsabschnitt des Ventils aufgesetzt wird. Die Ventilspindel oder eine Verlängerung der Ventilspindel wird z.B. in den Steuerkopf weitergeführt. Der Steuerkopf kann als Rückmeldemodul oder Detektionseinheit ausgebildet sein, oder als Steuerung, in der die detektierten Signale elektronisch für Steueraufgaben genutzt werden. An einem Teil der Ventilspindel innerhalb des Steuerkopfs ist ein Magnetelement angeordnet, das während des Verschiebevorgangs der Spindel in der ersten Spindelposition an einem ersten Reedsensor und in der zweiten Spindelposition an einem zweiten Reedsensor vorbeigeführt wird. Die Reedsensoren detektieren die Spindelpositionen. Beide Reedsensoren sind erfindungsgemäß auf einer gemeinsamen Leiterplatte des Sensormoduls angeordnet. Durch diese besondere Anordnung lassen sich die Lagen der Reedsensoren genauestens zueinander abstimmen und die Elektronik für die Reedsensoren auf der Leiterplatte realisieren. Anstatt Reedsensoren, die Magnetelemente erfassen, können dabei auch optische Sensoren, die Detektierelemente erfassen, vorgesehen sein, was auch für die nachfolgende Beschreibung gilt.

Das Ausschalten eines oder mehrerer Reedsensoren hat den Vorteil, dass die Sensoren auf die gewünschte Applikation individuell angepasst werden können. So ist es beispielsweise möglich, ein und dieselbe Vorrichtung sowohl als Zwei- oder Drei-Stellungsregler zu verwenden. Ferner kann die erfindungsgemäße Vorrichtung völlig baugleich, sozusagen identisch, für Hubventile mit unterschiedlichen Hüben verwendet werden. Für die verschiedenen Ventile werden lediglich andere Reedschalter auf der Leiterplatte verwendet. Die nicht verwendeten werden einfach abgeschaltet. Das heißt, auf der Leiterplatte sind Reedsensoren für die Positionen verschiedener Ventile angeordnet, und je nach verwendetem Ventil werden nur die dafür benötigten Reedsensoren eingeschaltet.

In einer Ausführungsform sind die Reedsensoren auf einer Leiterplatte des Sensormoduls axial übereinander angeordnet. Für jede Spindelposition, die detektiert werden soll, ist ein Reedsensor vorzusehen. Als axial übereinander sind hier alle Positionen anzusehen, bei denen die Reedsensoren in axialer Richtung versetzt sind. Die Reedsensoren können auch senkrecht zur axialen Richtung überlappend auf der Leiterplatte angeordnet sein, d.h. axial und zugleich auch seitlich versetzt sein.

Die Leiterplatte steht vorzugsweise parallel zur Spindel. Dadurch weisen alle Reedsensoren während des Verschiebevorgangs im Moment, in dem sich ein Sensor und das Magnetelement gegenüber liegen, den gleichen Abstand zum Magnetelement auf, und es kann leicht sichergestellt werden, dass das Magnetelement innerhalb des Ansprechbereichs der Reedsensoren, an diesen vorbei bewegt wird.

Selbstverständlich können auf der Leiterplatte außer den beiden Reedsensoren, die der Endlagendetektion dienen, also dem gewünschten maximalen und minimalem Hub entsprechen, noch weitere Reedsensoren angeordnet werden. Damit ist es möglich, eine oder mehrere Zwischenpositionen der Spindel anzuzeigen, die zusätzlich von Interesse sind.

Das Deaktivieren der Reedsensoren, die keine Spindelposition detektieren sollen, findet vorzugsweise mittels DIP-Schalter statt. DIP-Schalter sind kostengünstige Bauteile und einfach zu bedienen.Beim Magnetelement, das auf der Spindel angeordnet ist, handelt es sich günstigerweise um einen axial polarisierten Permanentmagneten. Solche Permanentmagnete sind bekannt und werden in vielen Abmessungen und aus unterschiedlichen Materialien angeboten.

Das Magnetelement wird vorteilhaft mit einer Schutzkappe abgedeckt. Dadurch wird verhindert, dass dieses etwa durch unerwünschte mechanische Einflüsse beschädigt werden könnte.

Die Erfindung betrifft darüber hinaus auch einen Ventilbausatz mit einer erfindungsgemäßen Vorrichtung, denn die beschriebene Vorrichtung zur Endlagenerkennung ist besonders geeignet zur Verwendung in einem Ventilbausatz. Alle Ventile einer Ventilbaureihe mit unterschiedlichen Baugrößen werden mit identischen Leiterplatten bestückt, auf denen mindestens ein Reedsensorenpaar, vorzugsweise mindestens drei Reedsensoren, angeordnet ist. Es kann auch für jede Baugröße ein eigenes Reedsensorenpaar auf der Leiterplatte angeordnet sein. Nicht für die entsprechende Ventilbaugröße benötigte Ventilschalter können über Schalter deaktiviert werden. Da Reedsensoren preiswerte Bauteile sind, ist es günstiger, zusätzliche Reedsensoren vorzusehen als für jede Ventilbaugröße eine extra Leiterplatte herzustellen. Damit werden Herstellungs- sowie Lagerhaltungskosten reduziert.

Gemäß einer Ausführungsform werden in jedem Ventil die zusätzlichen Reedsensoren insbesondere mittels DIP-Schalter deaktiviert, die in diesem Ventil keine Spindelposition anzeigen. Je nach Auslegung der Ventilbaureihe kann derselbe Sensor auf der Leiterplatte eine erste Spindelposition anzeigen, die beispielsweise in mehreren oder allen Ventilen der Ventilschließstellung entspricht. Eine zweite Spindelposition, die beispielsweise dem maximalen Hub, d.h. der Ventiloffenstellung entspricht, kann je nach Ventilbaugröße von Reedsensoren detektiert werden, die auf der Leiterplatte axial übereinander versetzt angeordnet sind.

Selbstverständlich ist es auch möglich, dass derselbe Sensor in mehreren oder allen Ventilen unterschiedlicher Größe einer Baureihe eine zweite Spindelposition anzeigt.

Bei einer Ausführungsform für Doppelantriebe mit zwei Spindeln werden die Reedsensoren auf zwei separaten Leiterplattenabschnitten im Sensormodul angeordnet. Die erfindungsgemäße Vorrichtung für Endlagenerkennung in Hubventilen lässt sich auch im Fall von Doppelantrieben problemlos darauf anpassen. Damit ist die Vorrichtung flexibel und vielseitig anwendbar.

In einer weiteren Ausführungsform ist für jeden Reedsensor auf der Leiterplatte je ein Schalter vorgesehen. Dadurch ist es möglich alle Sensoren separat anzusprechen, zu aktivieren oder deaktivieren. Somit lassen sich beliebige Kombinationen aus aktiven bzw. nicht aktiven Sensoren realisieren.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
Fig. 1 eine Schnittansicht durch ein Ventil als Teil einer erfindungsgemäßen Ventilbaugruppe mit einem Sensormodul mit einer erfindungsgemäßen Vorrichtung Fig. 2 einen Detailschnitt gemäß Figur 1; und
Fig. 3 eine Draufsicht auf eine Ausführungsform eines bei der Erfindung eingesetzten Sensormoduls.

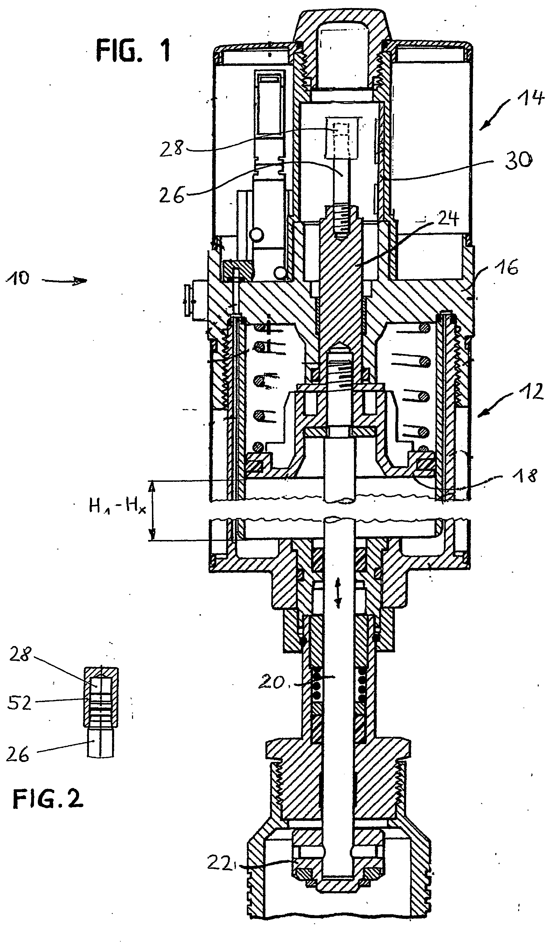

Fig. 1 zeigt ein Ventil 10 mit einem Ventilantrieb 12 und einem am Ventilantrieb 12 stirnseitig angebrachten Steuerkopf 14. Der Ventilantrieb 12 umfasst eine obere Stirnwand 16, an der der Steuerkopf 14 angebracht ist.

Der Steuerkopf 14 kann je nach Applikation ein Rückmeldemodul oder ein Steuermodul sein.

Ein Kolben 18 ist mit einer Spindel 20 verbunden, die wiederum ein Ventilglied 22 bewegt, das gegen einen Ventilsitz reversibel verfahrbar ist, um eine Absperr- und Öffnungsfunktion zu realisieren.

Bezüglich weiterer Einzelheiten zum prinzipiellen Aufbau eines solchen Ventils kann auf die DE 103 36 065 A1 verwiesen werden.

Die Spindel 20 ist über eine Koppelstange 24 mit einer Spindel 26 in dem Steuerkopf 14 verbunden. Alternativ können die Spindeln 20 und 26 auch direkt miteinander verbunden sein. Es ist auch denkbar, dass die Spindel 20 selbst durch die Stirnwand 16 in den Steuerkopf 14 ragt.

An der Spindel 26 ist ein Magnetelement 28 zur Positionserfassung angebracht, wobei auch mehrere Magnetelemente 28 an der Spindel 26 angebracht sein können. Im dargestellten Ausführungsbeispiel, das nicht einschränkend zu verstehen ist, wird das Magnetelement 28 am Ende der Spindel 26 an dieser fixiert und bewegt sich zusammen mit dieser, wenn die Spindel 20 und damit auch die Spindel 26 axial verfahren wird.

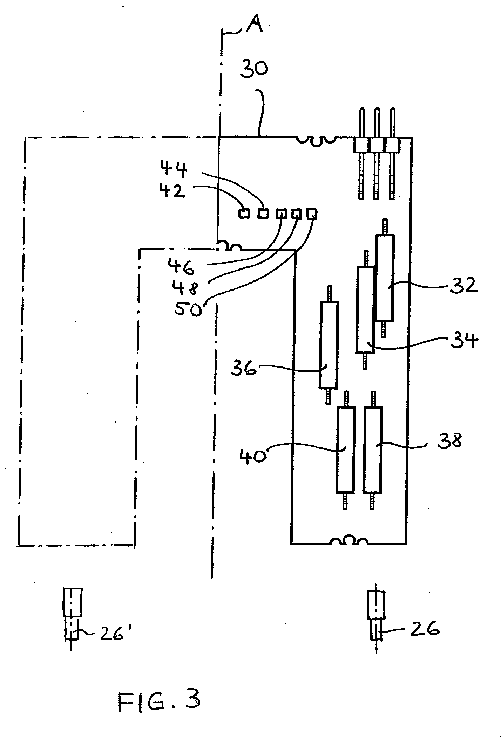

Für die Positionserfassung der Spindel 20 ist eine Vorrichtung zur Endlagenerkennung vorgesehen, die neben dem Magnetelement 28 ein Sensormodul mit einer Leiterplatte 30 umfasst, auf der mehrere Reedsensoren 32 bis 40 sitzen (siehe Fig. 3).

Die Leiterplatte 30 erstreckt sich vorzugsweise mit ihrer Ebene parallel zur Spindelbewegungsachse und wird im Steuerkopf 14 entsprechend ausgerichtet gehaltert.

Ein erster Reedsensor 32 detektiert eine erste Spindelposition und ein zweiter Reedsensor 38 eine zweite Spindelposition.

Die Reedsensoren 32, 38 sind axial voneinander entsprechend des Hubs des eingesetzten Ventils beabstandet. Bei der ersten Spindelposition kann es sich beispielsweise um die Ventiloffenstellung handeln und bei der zweiten Spindelposition um die Ventilschließstellung.

Bei dieser Anordnung werden mit der erfindungsgemäßen Vorrichtung die Endlagen des maximalen Hubs angezeigt.

Die Reedsensoren 32 und 38 werden auf der Leiterplatte 30 im Abstand des zu erfassenden Hubs H₁ axial übereinander positioniert.

Für jede weitere Spindelposition, die detektiert werden soll, sind auf der Leiterplatte 30 weitere Reedsensoren 34 und 36 vorzusehen. So können neben den Endlagen auch Zwischenpositionen angezeigt werden.

Reedsensoren 40, gegebenenfalls 34 und 36, die keine Spindelposition anzeigen sollen, werden mittels zugeordneter Schalter 46 bis 50, insbesondere DIP-Schalter, ausgeschaltet. Vorzugsweise ist jedem Reedsensor 32 bis 40 ein eigener Schalter 42 bis 50 zugeordnet, um jeden Reedschalter 32 bis 40 ein- oder auszuschalten.

Auf diese Weise ist es möglich, dasselbe Sensormodul mit nur einer Leiterplatte 30 als Zwei- oder Drei-Stellungsregler einzusetzen. Im Drei-Stellungsregler sind drei Reedsensoren 32, 34, 38 aktiviert und im Zwei-Stellungsregler ist der Reedsensor 34, der die Zwischenposition angibt, deaktiviert, also abgeschaltet, und die beiden Reedsensoren 32, 38, die die Endlagen melden, sind aktiv.

Das Magnetelement 28 ist vorzugsweise als axial polarisierter Permanentmagnet ausgebildet. Axial polarisierte Permanentmagnete sind bekannt und werden in unterschiedlichen Abmessungen und Ausgestaltungen angeboten.

Wie in Fig. 2 in einem Schnittbild, als Detailansicht des Magnetelements 28 auf der Spindel 26 dargestellt, wird das Magnetelement 28 auf der Spindel 26 mittels Schutzkappe 52 abgedeckt. Die Schutzkappe 52 verhindert, dass das Magnetelement 28 belastenden, dieses beschädigenden Einflüssen ausgesetzt wird, wodurch die Lebenszeit des Magnetelements 28 vorteilhaft erhöht wird. Magnetelemente 28 mit guten magnetischen Eigenschaften, die häufig aus gesintertem Material bestehen, das gegenüber mechanischer Belastung sehr empfindlich ist. Die Schutzkappe 52 kann als einfache Hülse ausgebildet sein, die über das Magnetelement 28 gestülpt wird.

Das Sensormodul und die gesamte Vorrichtung zur Endlagenerkennung sind dazu geeignet und bestimmt, in einem Steuerkopf 14 verbaut zu werden, der auf Ventile unterschiedlicher Baugrößen gesetzt werden kann, um einen Ventilbausatz zu bilden.

Der Ventilbausatz zeichnet sich durch verschiedene, möglichst die gleiche Schnittstelle zum Steuerkopf 14 aufweisende Ventile mit unterschiedlichen Hüben H₁ bis H_{X} aus. Das Ventil 10 in Figur 1 ist im Antriebsbereich quer zur Axialrichtung geschnitten, um die unterschiedlichen Ventile mit verschiedenen Baugrößen mit den Hüben H₁ bis H_{X} zu symbolisieren.

Um die absolut baugleiche Vorrichtung und das absolut baugleiche Sensormodul, gegebenenfalls sogar den absolut baugleichen Steuerkopf 14 für verschiedene Ventile verwenden zu können, wird die Leiterplatte 30 mit jeweils mindestens einem Reedsensorenpaar 32, 38 und 34, 38 und 36, 40 pro Ventilbauart bestückt. Reedsensoren, die im Ventil einer ausgewählten Baugröße keine zu detektierende Spindelposition haben, werden mittels Schalter 42 bis 50, insbesondere DIP-Schalter, deaktiviert. Das hat den Vorteil, dass ein baugleiches Sensormodul mit der Leiterplatte 30 und, zusammen mit dem Magnetelement 28, die baugleiche, d.h. identische Vorrichtung zur Endlagenerkennung für alle Ventile des Ventilbausatzes passt und nicht für jedes Ventil extra konstruiert und separat produziert werden muss. Dadurch werden Herstellungs- und Lagerkosten reduziert, was sich auf Grund der Verwendung der preisgünstigen Reedsensoren lohnt.

Im Gegensatz dazu werden bei bisher bekannten Vorrichtungen zur Endlagenerkennung mit mechanischen Schaltern für jede Ventilbaugröße extra Bauteile wie Schlitten und Halter benötigt.

Bei geschickter Konstruktionsweise kann beispielsweise ein einziger Reedsensor 38 eine erste Spindelposition in zwei Ventilen unterschiedlicher Baugröße detektieren und jeweils ein Reedsensor 32 oder 34 von zweien eine zweite Spindelposition in diesen Ventilen.

Obwohl die Reedsensoren 32, 34 seitlich etwas versetzt zum Reedsensor 38 stehen, können sie zusammen mit diesem eingesetzt werden und beim Vorbeifahren des Magnetelements 28 auf der Spindel 26 Spindelpositionen detektieren, da Reedsensoren einen Bereich aufweisen, in dem sie noch ansprechen.

Das hat den Vorteil, dass für zwei Ventile unterschiedlicher Baugröße zu Erkennung von jeweils zwei Spindelpositionen insgesamt nur drei anstatt vier Reedsensoren benötigt werden.

In einer Ausführungsform wirken ein Steuerkopf 14 und ein Sensormodul mit einem Doppelantrieb zusammen, der mit zwei Spindeln 20 und damit zwei Spindeln 26, 26' arbeitet (siehe Fig. 3). Hier werden ebenfalls nur eine Vorrichtung und ein Sensormodul mit nur einer Leiterplatte 30 eingesetzt. Dabei kann eine Leiterplatte verwendet werden, die eine um die Achse A gespiegelte Erweiterung (siehe strichpunktierte Linien in Fig. 3) hat, so dass die Leiterplatte zwei Leiterplattenabschnitte aufweist. Auf jedem Leiterplattenabschnitt sind Reedsensoren 32 bis 40 für je eine Spindel angeordnet.

Da beim Doppelantrieb für unterschiedliche Bauformen unterschiedliche Abstände der Spindeln 26, 26' vorkommen können, läßt sich aufgrund der seitlich leicht versetzten Reedsensoren auf jedem Leiterplattenabschnitt sicherstellen, dass die Magnetelemente noch erfasst werden. Beispielsweise sind die Reedsensoren 32 und 40 für die Spindel 26 einer Ventilbauart und die Reedsensoren 40 und 36 für die Spindel 26 einer kleineren Ventilbauart vorgesehen.

Das erfindungsgemäße Konzept für eine Vorrichtung zur Endlagenerkennung in Hubventilen ist, wie im letzten Beispiel gezeigt, flexibel und lässt sich einfach auf unterschiedliche Geräte und Ausführungen anpassen.

In gleicher Weise lässt sich die erfindungsgemäße Vorrichtung anstatt mit Reedsensoren 32 bis 40 und Magnetelement 28 auch mittels zumindest einer Lichtschranke umsetzen, die einen Lichtsender und einen Lichtempfänger aufweist, die auf derselben Leiterplatte 30 angeordnet sind und baugleich in einem ganzen Ventilbausatz eingesetzt werden können. Anstatt des Magnetelements 28 lassen sich Detektierelemente verwenden, d.h. Teile an der Spindel, deren Lage vom optischen Sensor erfasst wird.

## Patentansprüche

1. Vorrichtung zur Endlagenerkennung in Hubventilen (10) mit einem Sensormodul, einer darin axial, entsprechend dem Hub (H₁-Hₓ), von einer ersten zu einer zweiten Position verschiebbar geführten Ventilspindel (20, 26), mit einem Magnetelement (28) oder Detektierelement, das während des Verschiebevorgangs der Spindel (20, 26) in der ersten Spindelposition an einem ersten Reedsensor (38) bzw. optischen Sensor und in der zweiten Spindelposition an einem zweiten Reedsensor (32) bzw. optischen Sensor vorbeigeführt wird und die Reedsensoren (32, 38) oder optischen Sensoren die Spindelpositionen detektieren, **dadurch gekennzeichnet, dass** die zwei Reedsensoren (32, 38) oder optischen Sensoren auf einer Leiterplatte (30) im Sensormodul angeordnet sind und wenigstens ein weiterer Reedsensor (34, 36, 40) oder optischer Sensor auf der Leiterplatte (30) angeordnet ist, der weder der ersten noch der zweiten Spindelposition zugeordnet ist, wobei der wenigstens eine weitere Reedsensor (34, 36, 40) oder optische Sensor auf der Leiterplatte (30), der keine der Spindelpositionen detektiert, ausgeschaltet werden kann.

2. Vorrichtung nach Anspruch 1, wobei die Leiterplatte (30) parallel zur Spindel (20, 26) und die Reedsensoren (32, 38) oder optischen Sensoren darauf axial übereinander angeordnet sind.

3. Vorrichtung nach einem der vorhergehenden Ansprüche, wobei der eine weitere Reedsensor (34, 36, 40) oder optische Sensor mittels Schalter (46, 48, 50), insbesondere DIP-Schalter ausschaltbar ist.

4. Vorrichtung nach einem der vorhergehenden Ansprüche, wobei die Leiterplatte (30) zur Erkennung von weiteren Spindelpositionen weitere Reedsensoren (34, 36, 40) oder optische Sensoren aufweist, die jeweils einer weiteren Spindelposition zugeordnet sind.

5. Vorrichtung nach einem der vorherstehenden Ansprüche, wobei das Magnetelement (28) ein axial polarisierter Permanentmagnet ist.

6. Vorrichtung nach einem der vorstehenden Ansprüche, wobei das Magnetelement mittels einer Schutzkappe (52) abgedeckt ist.

7. Ventilbausatz für mehrere unterschiedliche Ventilbaugrößen, mit mehreren Ventilen, wobei jedes Ventil (10) eine Vorrichtung nach einem der vorstehenden Ansprüche mit für alle Ventilbaugrößen identischen Leiterplatten (30) aufweist, auf denen jeweils mindestens ein Reedsensorenpaar (32 und 38, 34 und 38, 36 und 40) oder optisches Sensorenpaar angeordnet ist und der oder die Reedsensoren (32, 34, 36, 38, 40) oder optische Sensoren auf der Leiterplatte (30), die nicht mit Spindelpositionen in der gewählten Ventilbaugröße zusammenwirken, mittels wenigstens eines Schalters (42, 44, 46, 48, 50), insbesondere DIP-Schalters deaktivierbar sind.

8. Ventilbausatz nach Anspruch 7, wobei derselbe Reedsensor (38) oder optische Sensor die erste oder zweite Spindelposition in mehreren Ventilbaugrößen detektiert.

9. Ventilbausatz nach Anspruch 7 oder 8, wobei in Sensormodulen für Doppelantriebe mit zwei Spindeln (20, 26) jeweils ein separater Leiterplattenabschnitt pro Spindel vorgesehen ist.

## Claims

1. A device for the end-position recognition in lift valves (10), having a sensor module, a valve spindle (20, 26) axially guided therein in accordance with the stroke (H₁-Hₓ) so as to be displaceable from a first position to a second position, having a magnetic element (28) or detecting element which during the displacing operation of the spindle (20, 26) is guided past a first reed sensor (38) or optical sensor in the first spindle position and past a second reed sensor (32) or optical sensor in the second spindle position, and the reed sensors (32, 38) or optical sensors detecting the spindle positions, **characterized in that** the two reed sensors (32, 38) or optical sensors are arranged on a printed circuit board (30) in the sensor module, and at least one further reed sensor (34, 36, 40) or optical sensor which is associated neither to the first nor to the second spindle position is arranged on the printed circuit board (30), wherein the at least one further reed sensor (34, 36, 40) or optical sensor on the printed circuit board (30) detecting none of the spindle positions can be turned off.

2. The device according to claim 1, wherein the printed circuit board (30) is arranged parallel to the spindle (20, 26), and the reed sensors (32, 38) or optical sensors are arranged axially one on top of each other thereon.

3. The device according to any of the preceding claims, wherein the one further reed sensor (34, 36, 40) or optical sensor is adapted to be switched off by means of switches (46, 48, 50), in particular DIP switches.

4. The device according to any of the preceding claims, wherein for the recognition of further spindle positions, the printed circuit board (30) includes further reed sensors (34, 36, 40) or optical sensors each associated with a further spindle position.

5. The device according to any of the preceding claims, wherein the magnetic element (28) is an axially polarized permanent magnet.

6. The device according to any of the preceding claims, wherein the magnetic element is covered by a protective cap (52).

7. A valve kit for a plurality of different valve sizes, having a plurality of valves, each valve (10) including a device according to any of the preceding claims having identical printed circuit boards (30) for all valve sizes each having at least one reed sensor pair (32 and 38, 34 and 38, 36 and 40) or optical sensor pair arranged thereon, and the reed sensor(s) (32, 34, 36, 38, 40) or optical sensor(s) on the printed circuit board (30) not cooperating with spindle positions in the selected valve size being adapted to be deactivated by means of at least one switch (42, 44, 46, 48, 50), in particular a DIP switch.

8. The valve kit according to claim 7, the same reed sensor (38) or optical sensor detecting the first or second spindle position in a plurality of valve sizes.

9. The valve kit according to claim 7 or 8, a respective separate printed circuit board portion being provided per spindle in sensor modules for double drives having two spindles (20, 26).

## Revendications

1. Dispositif pour la reconnaissance de fin de course dans des soupapes de levée (10) comportant un module de capteur, une tige de soupape (20, 26) guidée axialement dans celui-ci selon la course (H₁-Hₓ) de manière à pouvoir être déplacée d'une première position vers une deuxième position, comportant un élément magnétique (28) ou un élément de détection lequel, lors de l'opération de déplacement de la tige (20, 26), est guidé au-delà d'un premier capteur reed (38) ou capteur optique dans la première position de tige, et au-delà d'un deuxième capteur reed (32) ou capteur optique dans la deuxième position de tige, les capteurs reed (32, 38) ou capteurs optiques détectant les positions de tige, **caractérisé en ce que** les deux capteurs reed (32, 38) ou capteurs optiques sont agencés sur une carte de circuits imprimés (30) dans le module de capteur et **en ce qu'**au moins un capteur reed (34, 36, 40) ou capteur optique additionnel est agencé sur la plaque de circuits imprimés (30), lequel n'est associé ni à la première ni à la deuxième position de tige, ledit au moins un capteur reed (34, 36, 40) ou capteur optique additionnel sur la plaque de circuits imprimés (30) qui ne détecte aucune des positions de tige pouvant être déconnecté.

2. Dispositif selon la revendication 1, la carte de circuits imprimés (30) étant agencée parallèlement à la tige (20, 26), et les capteurs reed (32, 38) ou capteurs optiques étant axialement superposés sur celle-ci.

3. Dispositif selon l'une des revendications précédentes, ledit capteur reed (34, 36, 40) ou capteur optique additionnel étant apte à être déconnecté au moyen de commutateurs (46, 48, 50), en particulier de commutateurs DIP.

4. Dispositif selon l'une des revendications précédentes, la carte de circuits imprimés (30) présentant pour la reconnaissance d'autres positions de tige des capteurs reed (34, 36, 40) ou capteurs optiques additionnels qui sont chacun associés à une autre position de tige.

5. Dispositif selon l'une des revendications précédentes, l'élément magnétique (28) étant un aimant permanent polarisé axialement.

6. Dispositif selon l'une des revendications précédentes, l'élément magnétique étant recouvert d'un capot de protection (52).

7. Kit de soupape pour plusieurs tailles de soupape différentes, comprenant plusieurs soupapes, chaque soupape (10) présentant un dispositif selon l'une des revendications précédentes qui comporte des cartes de circuits imprimés (30) identiques pour toutes les tailles de soupape, sur chacune desquelles au moins une paire de capteurs reed (32 et 38, 34 et 38, 36 et 40) ou une paire de capteurs optiques est agencée, et le ou les capteur(s) reed (32, 34, 36, 38, 40) ou capteur(s) optique(s) sur la carte de circuits imprimés (30) ne coopérant pas avec des positions de tige dans la taille de soupape choisie étant apte(s) à être désactivé(s) au moyen d'au moins un commutateur (42, 44, 46, 48, 50), en particulier un commutateur DIP.

8. Kit de soupape selon la revendication 7, le même capteur reed (38) ou capteur optique détectant la première ou deuxième position de tige dans plusieurs tailles de soupape.

9. Kit de soupape selon la revendication 7 ou 8, un tronçon de carte de circuits imprimés séparé pour chaque tige étant respectivement prévu dans des modules de capteur pour des entraînements doubles à deux tiges (20, 26).
